# EUROPÄISCHE PATENTSCHRIFT

(11) **EP 0 662 884 B1**
(45) Veröffentlichungstag und Bekanntmachung des Hinweises auf die Patenterteilung: **12.03.1997**
(21) Anmeldenummer: 93921804.6
(22) Anmeldetag: 08.10.1993
(51) Int. Cl.: B60R 25/04

(54) **SICHERHEITSEINRICHTUNG**
SAFETY DEVICE
DISPOSITIF DE SECURITE

(30) Priorität: 08.10.1992 AU PL5159/92
(43) Veröffentlichungstag der Anmeldung: 19.07.1995
(73) Patentinhaber: ROBERT BOSCH GMBH, 70442 Stuttgart (DE)
(72) Erfinder: LINTON, Rodney, Phillip, Wantirna South, VIC 3152 (AU); EGLINSCH-VEGLINSCH, Janis, Ivanhoe, VIC 3079 (AU); MATUSCHEK, Wolfgang, Patterson Lakes, VIC 3197 (AU)
(86) Internationale Anmeldenummer: DE9300953
(87) Internationale Veröffentlichungsnummer: WO9408823

(56) Entgegenhaltungen:
- EP-A- 0 191 934
- EP-A- 0 351 183
- FR-A- 2 454 503
- FR-A- 2 487 274
- GB-A- 2 251 503

## Beschreibung

### Stand der Technik

Die vorliegende Erfindung geht aus von einer, insbesondere zur Verwendung in Kraftfahrzeugen vorgesehenen Sicherheitseinrichtung nach der Gattung des Hauptanspruchs. Eine solche ist bekannt aus der GB-A- 2 251 503. Offenbart ist darin ein Sicherungssystem für Kraftfahrzeuge mit einem elektronischen Schlüssel, einem zentralen Prozessor, und mehreren Komponentenprozessoren. Wird der Schlüssel in eine vorgegebene Lage bewegt, liest der zentrale Prozessor einen auf dem Schlüssel vorhandenen Speicher aus und übernimmt den darin abgelegten Code. Anschließend führt der zentrale Prozessor einen Datenaustausch mit den Komponentenprozessoren durch, um die Inbetriebnahmeberechtigung des Nutzers zu prüfen. Das Konzept der Hinterlegung eines fahrzeugspezifischen Codes auf dem Schlüssel unterbindet wirksam eine unberechtigte Inbetriebnahme des Fahrzeuges, bedingt aber durch die Ausbildung eines Speichers mit Signalzuleitungen einen erhöhten Herstellungsaufwand. Zudem kann auch eine mechanische Beschädigung des Schlüssels eine Fahrzeuginbetriebnahme verhindern, und ist der Ersatz eines beschädigten oder verlorengegangenen Schlüssels schwierig, da hierfür der zu hinterlegende Code bekannt sein muß.

Durch die australische Anmeldung Nr. 68 203/90 ist desweiteren eine elektronische Sicherheitseinrichtung für Kraftfahrzeuge bekannt, welche eine elektronische Stillsetzung eines Fahrzeuges gestattet, z. B. durch Verriegelung der Einspritzanlage. Der Gegenstand dieser Anmeldung soll in die vorliegende Beschreibung einbezogen sein.

Es ist Aufgabe der vorliegenden Erfindung, eine Sicherheitseinrichtung anzugeben, die keine im Schlüssel realisierte elektronische Funktionen aufweist, und die dennoch schwer umgehbar ist.

Diese Aufgabe wird gelöst durch eine Sicherheitseinrichtung mit den kennzeichnenden Merkmalen des Hauptanspruchs. Vorteilhaft weist die erfindungsgemäße Sicherheitseinrichtung eine elektronische Steuereinheit zum Steuern des Betriebes einer zu sichernden Vorrichtung, mehrere Sensoren zur Erfassung bestimmter Betriebsparameter der zu sichernden Vorrichtung, sowie einen Sicherheitsschaltkreis auf, welcher mit den Sensoren verbunden ist und von diesen beeinflußt wird. Bei Inbetriebnahme prüft die elektronische Steuereinheit den Sicherheitsschaltkreis und steuert den Betrieb der zu schützenden Vorrichtungen abhängig vom Ergebnis dieser Prüfung. Die mechanische Betätigung zur Inbetriebnahme kann in vorteilhafter Weise mit herkömmlichen Schlüsseln erfolgen, die keine elektronischen Funktionen im Zusammenhang mit der Sicherheitseinrichtung wahrnehmen.

Vorzugsweise weisen der Sicherheitsschaltkreis und die elektronische Steuereinheit jeweils einen Speicher auf, in denen identische Sicherheitscodes abgelegt sind. Bei der Prüfung des Sicherheitsschaltkreises wird wenigstens ein Code aus dessen Speicher an die elektronische Steuereinheit übertragen. Stellt einer der Sensoren fest, daß ein Betriebsparameter einen unzulässigen Wert angenommen hat, wird die Übertragung der Codes verwürfelt oder beendet.

In einer bevorzugten Ausführungsform überwachen die Sensoren die axiale und/oder die Winkelposition des Schaftes eines Kraftfahrzeuglenkradschlosses.

Ein Ausführungsbeispiel der Sicherheitseinrichtung wird nachfolgend anhand der Zeichnung näher erläutert.

### Zeichnung

Es zeigen Figur 1 eine Darstellung des Aufbaus der vorgeschlagenen Sicherheitseinrichtung bei Verwendung in einem Kraftfahrzeug, Figuren 2 bis 5 verschiedene Betriebszustände einer an einem Lenkradschloß eines Kraftfahrzeuges angeordneten Sicherheitseinrichtung, jeweils im und in Draufsicht, Figur 6 eine Tabelle der möglichen Betriebszustände.

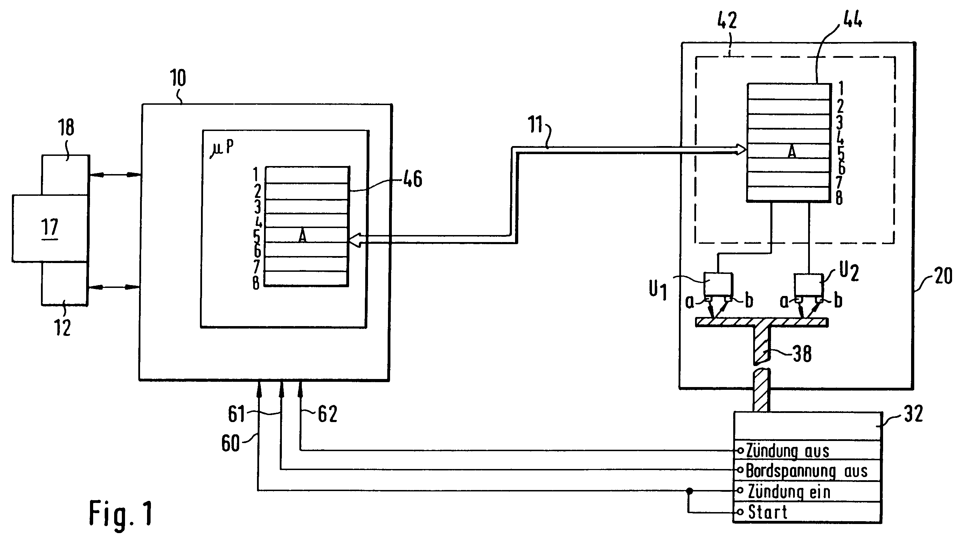

In Figur 1 ist mit der Bezugszahl 10 eine elektronische Steuereinheit bezeichnet, welche in der hier angenommenen Anwendung in einem KFZ beispielsweise zur Steuerung eines Motorstarterrelais 18 und/oder eines Motorsteuergerätes 12, welches seinerseits insbesondere die Zündung sowie die Benzinversorgung des Motors 17 kontrolliert, dient. Zur Vermeidung einer sonst erforderlichen großen Zahl von Schaltkreiselementen besteht sie zweckmäßig im wesentlichen aus einem Mikroprozessor.

Mit der Steuereinheit 10 über eine Datenleitung 11 verbunden ist ein elektronische Schaltkreis 42, die im Sockel 22 eines Zündschloßgehäuses 24 angeordnet ist. Im Zündschloßgehäuse 24 befindet sich ferner ein Schaft 26, welcher mit dem nicht dargestellten Schließzylinder des Zündschlosses gedreht wird. Der Schaft 26 weist ein Kopplungselement 28 auf, welches in ein entsprechendes komplementäres Kopplungselement an einen Zündschalter 32 greift. Beide Kopplungselemente 28, 30 können durch einen Stift 34 gesichert sein. Der Zündschalter 32 befindet sich innerhalb des Sockels 22 und ist durch Mitnehmerstifte 36 befestigt. Am schaftseitigen Kopplungselement 28 ist koaxial ein reflektierender Flügel 38 in Form einer kreisförmigen Scheibe, aus welcher ein Winkelsegment herausgeschnitten wurde, angeordnet. Unter dem Flügel 38 befindet sich eine Platine 40, auf welcher der elektronische Schaltkreis 42 angeordnet ist. Weiterhin befinden sich auf der Platine 40 zwei Sensoren U₁ und U₂ zur Erfassung der Position des Flügels 38. Im hier beschriebenen Ausführungsbeispiel sind die Sensoren U₁, U₂ elektro-optische Sensoren, welche optische Strahlung sowohl senden als auch empfangen. Ebenso können die Sensoren aber auch als magnetische Sensoren, Reed-Schalter, Ultraschallsensoren, RF-Sensoren, mechanische Schalter oder vergleichbare Anordnungen ausgeführt sein. Jeder Sensor U₁, U₂ verfügt sowohl über einen Emitter a zum Aussenden von Licht wie über einen Detektor b zum Erfassen von einfallendem, insbesondere am Flügel 38 reflektiertem und/oder Umgebungslicht. Die Anordnung von Flügel 38 und Sensoren U₁, U₂ ist so ausgebildet, daß, wenn der Flügel 38 einen Sensor U₁, U₂ bedeckt, die vom Emitter a dieses Sensors U₁, U₂ ausgesandte Strahlung auf den Detektor b reflektiert wird. Mit den Sensoren U₁, U₂ verbunden ist ein Schaltkreis 42, welcher einen Nur-Lesespeicher 44, zweckmäßig in Form eines elektrisch löschbaren programmierbaren Nur-Lesespeichers (EEPROM) enthält. Der Speicher 44 kann ebenso aber auch ein RAM, ROM, EPROM, Flash-Speicher oder jeder andere Speichertyp sein. Wird als Speicher 44 ein EEPROM eingesetzt, benötigt der Schaltkreis 42, da ein EEPROM ein seriell arbeitendes Bauelement ist, lediglich vier externe Ein- beziehungsweise Ausgänge es sind dies die Masse, Spannungsversorgung, Chip-Select-Zähler sowie Daten-Ein/Ausgang. Der Verdrahtungsaufwand ist bei einer solchen Ausführung gering.

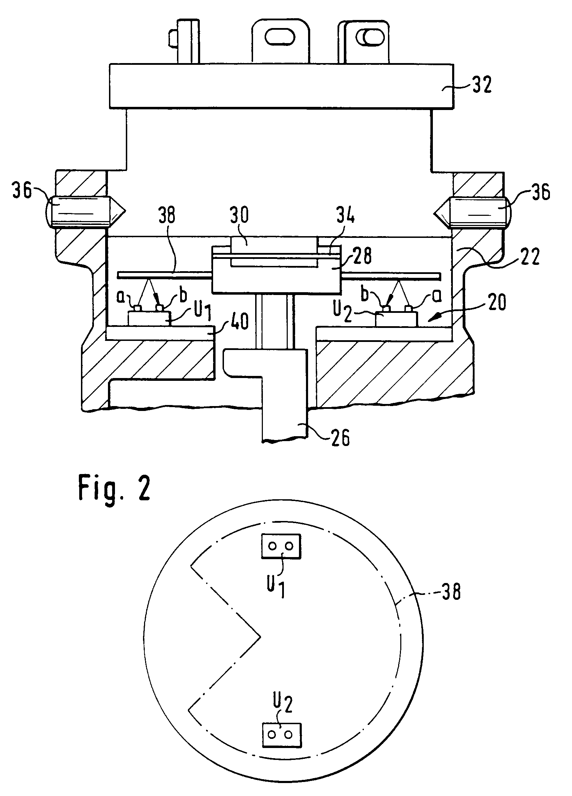

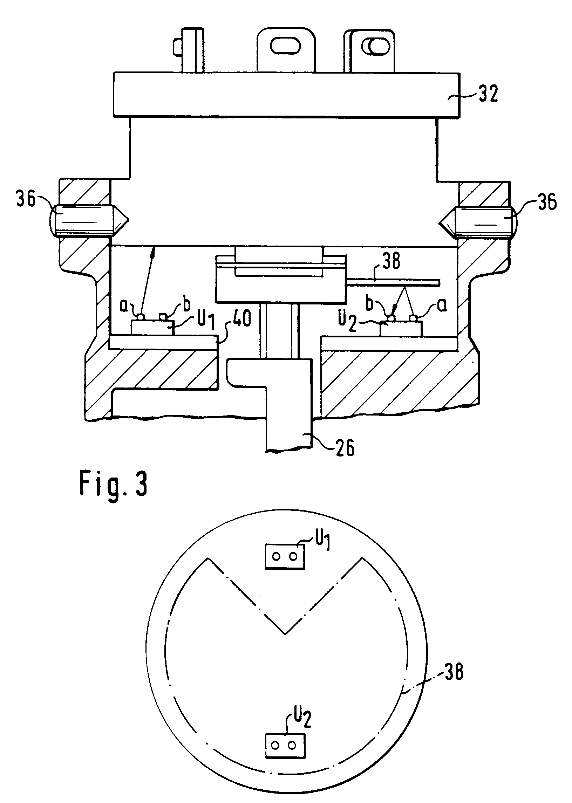

Wie in den Figuren 2 und 3 dargestellt, ist der Sensor U₂ während des Normalbetriebs ständig durch den Flügel 38 bedeckt. Werden der Flügel 38 oder der Zündschalter 32 entfernt, stellt der Sensor U₂ dieses durch Ausbleiben des an dem Flügel 38 reflektierten Signals fest. Der zweite Sensor U₁ erfaßt anhand der Position des mit dem Schaft 26 verbundenen Flügels 38 dessen Position. Die Position des Schaftes 26 bestimmt ihrerseits die Stellung des Zündschalters 32, welche wiederum, wie in Figur 1 angedeutet, über Eingänge 60, 61 und 62 von der Steuereinheit 10 erfaßt wird. Üblicherweise kann der Zündschalter 32 die Positionen "Zündung aus", Eingang 62, "Bordspannung ein", Eingang 61, "Zündung ein" und "Start", Eingang 60 einnehmen. Wie in Figur 3 angedeutet, bedeckt der Flügel 38 in der Position "Zündung aus" sowohl Sensor U₁ wie auch Sensor U₂. In der Position Start/Zündung hingegen ist der Flügel 38 so gedreht, daß sich genau das ausgeschnittene Segment des Flügels 38 über dem Sensor U₁ befindet, dieser dadurch nicht vom Flügel 38 bedeckt wird. Vom Sensor U₁ emitiertes Licht wird in dieser Position entsprechend nicht am Flügel 38 reflektiert. Der Ausgang des Sensors U₁ ist mit dem "ORG"-Pin des Speichers 44 verbunden. Über diesen legt der Sensor U₁ fest, ob der Speicher 8-Bit oder 16-Bit-Daten ausgibt. Der Sensor U₂ ist ausgangsseitig mit dem "ENABLE" oder "CS"-Pin des Speichers 44 verbunden. Entsprechend seinem Zustand aktiviert oder deaktiviert er den Speicher 44. In dem Speicher 44 sind beispielsweise acht Codes in Speicherpositionen 1 bis 8 abgelegt. Genaue Anzahl und Gestalt der Codes richten sich nach den jeweiligen Anforderungen.

In dem beschriebenen Ausführungsbeispiel ist der Code so aufgebaut, daß jedem Fahrzeug ein anderer Code zugeordnet ist. Die Wahrscheinlichkeit, daß zwei Fahrzeugen derselbe Code zugeordnet ist, ist in diesem Fall geringer als 1:16 Millionen. Im Speicher 46 der elektronischen Steuereinheit 10 sind mit den im Speicher 44 angeordneten identische Codes abgelegt. Wie in Figur 1 veranschaulicht, sollen im Ausführungsbeispiel die Positionen 5 beider Speicher 44 und 46 jeweils den identischen Code A enthalten.

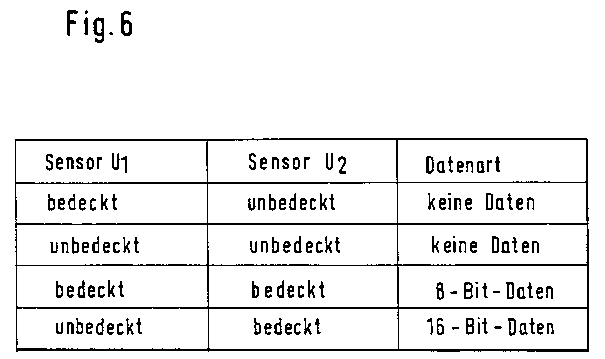

Nachfolgend wird die Funktionsweise der Sicherheitseinrichtung beschrieben. Stellt die elektronische Steuereinheit 10 während des Betriebs beziehungsweise bei Inbetriebnahme der zu sichernden Vorrichtung, hier einem KFZ, fest, im Ausführungsbeispiel insbesondere anhand der Bewegung des Zündschalters 32 in die Position "Zündung/Start", daß eine Verarbeitung von Sicherheits- oder Diagnosedaten erforderlich ist, sendet sie zunächst über die Datenleitung 11 einen seriellen Datenzug an den elektronischen Schaltkreis 42, der veranlaßt, daß ein bestimmter Inhalt des Speichers 44 ausgelesen wird. Hierzu enthält ein solcher Datenzug typischerweise ein Startbit, einen Code um die Lesefunktion einzuleiten, sowie eine Adresse, welche den ausgewählten Speicherinhalt bezeichnet. Der Schaltkreis 42 interpretiert den seriellen Datenzug und sendet den durch diesen bestimmten Inhalt aus dem Speicher 44, beispielsweise den Code A an die elektronische Steuereinheit 10 zurück. Diese prüft den vom Schaltkreis 42 erhaltenen Code auf Richtigkeit, insbesondere durch Vergleich mit dem im Speicher 46 abgelegten identischen Code A. Ist der zu der Steuereinheit 10 zurückgeschickte Code nicht in Ordnung, wird eine Inbetriebnahme des Fahrzeugs beziehungsweise der zu sichernden Vorrichtung unterbunden. Da, besonders in einem Fahrzeug möglicherweise elektrische Störungen auftreten können, ist es sinnvoll, jeweils wenigstens drei verschiedene Codes in dieser Weise zwischen Schaltkreis 42 und elektronischer Steuereinheit 10 auszutauschen. Sind wenigstens zwei der von der elektronischen Steuereinheit 10 im Schaltkreis 42 abgefragten Codes korrekt, wird das Fahrzeug zum Start freigegeben. Befindet sich der Zündschalter 32 in der Position "Aus", wie in Figur 2 dargestellt, bedeckt der Flügel 38 beide Sensoren U₁ und U₂. Wie in Figur 6 wiedergegeben, bewirkt der Sensor U₁ in diesem Fall über den ORG-Pin des Speichers 44, daß nur 8-Bit-Daten, statt 16-Bit-Daten übertragen werden können. Im Ausführungsbeispiel gemäß Figur 2 bedeutet dies, daß der Steuereinheit 10 ein nicht korrekter Antwortcode übertragen wird. Das Fahrzeug beziehungsweise die zu sichernde Vorrichtung kann nicht in Betrieb genommen werden. Wird der Schaft 26 von der Position "Aus" in die Position "Start/Zündung" bewegt, liegt dem Sensor U₁ das ausgeschnittene Kreissegment des Flügels 38 gegenüber. In diesem Fall wird der ORG-Pin des Speichers 44 aktiviert, um 16-Bit-Daten zu übertragen. Wurden wenigstens zwei von drei von der elektronischen Steuereinheit 10 angeforderte Codes richtig übertragen, gibt die elektronische Steuereinheit 10 das Motorsteuergerät 12 frei, welches daraufhin das Einspritzsystem aktiviert und das Motorstarterrelais 18 schließt. Das Fahrzeug, oder allgemein die zu sichernde Vorrichtung, kann dann in Betrieb genommen werden.

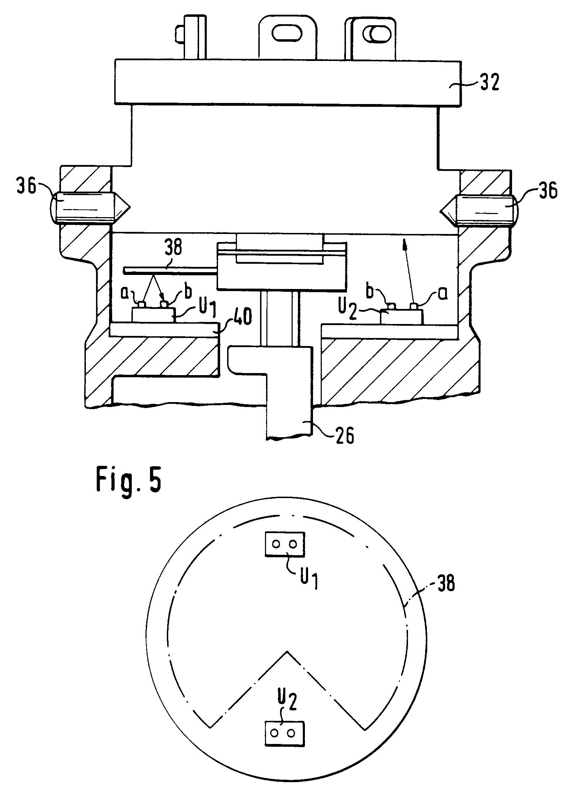

Wird der Schaft 26 in falscher Weise gedreht, wie in Figur 5 angedeutet, ist nur der Sensor U₁, nicht aber der Sensor U₂ durch den Flügel bedeckt. Der Sensor U₂ deaktiviert daraufhin den Speicher 44 über den ENABLE-Pin. Wie in Figur 6 dargestellt, werden keine Daten an die elektronische Steuereinheit übertragen, das Fahrzeug ist nicht startbar.

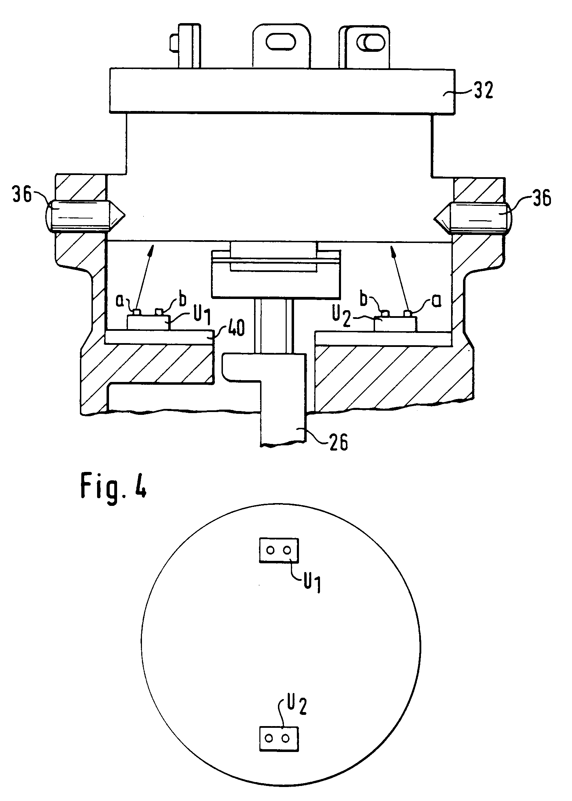

Im Falle eines Versuchs, das Fahrzeug kurzzuschließen, löst zwar das Zündsignal auf der Leitung 61 zunächst eine Datenübertragung über die elektronische Steuereinheit 10 aus. Da sich der Schaft 26 und mit ihm der Zündschalter 32 jedoch unverändert in der "Aus"-Position befindet, bleibt der Sensor U₁ von dem Flügel 38 bedeckt, woraufhin, wie in Figur 7 dargestellt, nur 8-Bit-Daten vom Schaltkreis 42 zur elektronischen Steuereinheit 10 übertragen werden. In dem hier beschriebenen Ausführungsbeispiel entspricht ein 8-Bit-Datenzug einem unkorrekten Code. Motor- und Starterfunktionen werden deshalb nicht freigegeben. Wird der Zündschalter 32 andererseits, zum Beispiel mit Gewalt entfernt, so daß die in Figur 4 angedeutete Situation vorliegt, werden beide Sensoren U₁ und U₂ offengelegt. Da Sensor U₂ in diesem Fall keine reflektierten Signale empfängt, wird die Datenübertragung vom Schaltkreis 42 zur elektronischen Steuereinheit 10 verriegelt. Die einzige Möglichkeit, den Sensor U₁ in richtiger Weise offenzulegen, besteht darin, den Flügel 38 durch Drehung des Schaftes 26 in die richtige, in Figur 3 dargestellte Position zu bewegen. Da der Schaft 26 wiederum mit dem Schließzylinder des Zündschlosses verbunden ist, muß der richtige Schlüssel benutzt werden, um eine Drehung des Schaftes 26 zu bewirken. Da ferner die Übertragung digitaler Daten nur innerhalb der Sicherheitseinrichtung erfolgt, ist es für einen unrechtmäßigen Benutzer schwierig, in das Leitungssystem der Sicherheitseinrichtung einzudringen, um es zu umgehen.

Die beschriebene Sicherheitseinrichtung kann in einfacher Weise auf vorhandene Fahrzeuge sowohl mit als auch ohne Motorsteuergerät nachgerüstet werden. Ferner ist es möglich, die Sicherheitseinrichtung in das Motormanagementsystem zu integrieren.

Obgleich sich das vorstehend beschriebene Ausführungsbeispiel auf ein Kraftfahrzeug bezog, ist es ebenso möglich, eine ähnliche Sicherheitseinrichtung auch in anderen Anwendungen einzusetzen, zum Beispiel zum Schutz von Häusern oder Industrieanlagen.

Unter Beibehaltung des grundlegenden Konzeptes eröffnet sich ferner ein breites Spektrum an Variationen, insbesondere hinsichtlich der Formgebung, der Konstruktion sowie der Anordnung der eingesetzten Komponenten.

## Patentansprüche

1. Sicherheitseinrichtung, vorzugsweise für Kraftfahrzeuge, mit einer elektronischen Steuereinheit (10) zur Steuerung der Funktionen einer zu sichernden Vorrichtung, sowie mit einer auf die elektronische Steuereinheit (10) einwirkenden mechanischen Einrichtung (32, 60, 61, 62) zur Betätigung der zu sichernden Vorrichtung,
dadurch gekennzeichnet, daß
zur Erfassung bestimmter örtlicher Lagen der mechanischen Betätigungseinrichtung (32, 60, 61, 62) wenigstens zwei Sensoren (U₁, U₂) vorgesehen sind, deren Ausgangssignale einem Schaltkreis (42) zugeführt sind, welcher mit der elektronischen Steuereinheit (10) einen Datenaustausch führt, um deren Betriebsbereitschaft zu steuern, wobei die zu sichernde Vorrichtung nur dann durch den Datenaustausch in Betriebsbereitschaft setzbar ist, wenn die Ausgangssignale der Sensoren (U₁, U₂) einer vorgegebenen örtlichen Lage der mechanischen Betätigungsmittel (32, 60, 61, 62) entsprechen.

2. Sicherheitseinrichtung nach Anspruch 1, dadurch gekennzeichnet, daß der Schaltkreis (42) einen Speicher (44) aufweist, in welchem wenigstens ein vorbestimmter Code abgelegt ist, und daß die elektronische Steuereinheit (10) nur dann betriebsbereit ist, wenn sie nach Anforderung wenigstens eines vorbestimmten Codes (A) aus dem Speicher (44) des Schaltkreises (42) diesen von dem Schaltkreis (42) auch erhält.

3. Sicherheitseinrichtung nach Anspruch 1, dadurch gekennzeichnet, daß wenigstens einer der Sensoren (U₁, U₂) bei unrichtiger Benutzung der zu sichernden Vorrichtung ein Signal an den Schaltkreis (42) ergibt, welches bewirkt, daß diese nach Empfang einer Anforderung zur Übertragung eines Codes von der elektronischen Steuereinheit (10) jener keinen oder einen verwürfelten Code zurücksendet.

4. Sicherheitseinrichtung nach Anspruch 1, dadurch gekennzeichnet, daß die mechanische Betätigungseinrichtung (32, 60, 61, 62) der Schließzylinder eines mittels eines Schlüssels zu betätigenden Schlosses ist.

5. Sicherheitseinrichtung nach Anspruch 1, dadurch gekennzeichnet, daß einer der Sensoren (U1, U2) mit dem Aktivierungseingang des Speichers (44) verbunden ist, um dessen Aktivität zu bestimmen.

6. Sicherheitseinrichtung nach Anspruch 1, dadurch gekennzeichnet, daß die Sensoren (U1, U2) elektro-optische Sensoren sind.

7. Sicherheitseinrichtung nach Anspruch 2, dadurch gekennzeichnet, daß die elektronische Steuereinheit (10) nur dann betriebsbereit ist, wenn sie nach Anforderung einer vorgegebenen Anzahl von vorbestimmten Codes aus dem Speicher (44) des Schaltkreises (42) wenigstens einen vorgegebenen Teil davon auch erhält.

## Claims

1. Security device, preferably for motor vehicles, having an electronic control unit (10) for controlling the functions of an apparatus to be protected, and having a mechanical device (32, 60, 61, 62), acting on the electronic control unit (10), for actuating the apparatus to be protected, characterized in that, in order to detect specific local positions of the mechanical actuation device (32, 60, 61, 62), at least two sensors (U₁, U₂) are provided whose output signals are fed to a circuit (42) which carries out an exchange of data with the electronic control unit (10) in order to control its operational capability, in which case it is only possible for the apparatus which is to be protected to be made operative by the exchange of data if the output signals of the sensors (U₁, U₂) correspond to a prescribed local position of the mechanical actuation means (32, 60, 61, 62).

2. Security device according to Claim 1, characterized in that the circuit (42) has a memory (44) in which at least one predetermined code is stored, and in that the electronic control unit (10) is only operative if, on requesting at least one predetermined code (A) from the memory (44) of the circuit (42), it also receives the said code (A) from the circuit (42).

3. Security device according to Claim 1, characterized in that, in the case of incorrect use of the apparatus to be protected, at least one of the sensors (U₁, U₂) transmits a signal to the circuit (42), which signal has the effect that, after reception of a request for the transmission of a code from the electronic control unit (10), the said apparatus does not send back any code or sends back a scrambled code to the said control unit.

4. Security device according to Claim 1, characterized in that the mechanical actuation device (32, 60, 61, 62) is the locking cylinder of a lock to be actuated by means of a key.

5. Security device according to Claim 1, characterized in that one of the sensors (U₁, U₂) is connected to the activation input of the memory (44) in order to determine whether it is activated.

6. Security device according to Claim 1, characterized in that the sensors (U₁, U₂) are electro-optical sensors.

7. Security device according to Claim 2, characterized in that the electronic control unit (10) is only operative if, on requesting a prescribed number of predetermined codes from the memory (44) of the circuit (42), it also receives at least a prescribed portion thereof.

## Revendications

1. Dispositif de sécurité, de préférence pour des véhicules automobiles avec une unité de commande électronique (10) servant à commander les fonctionnements d'un dispositif à rendre sûr, et avec un système mécanique (32, 60, 61, 62) agissant sur l'unité de commande électronique (10) pour actionner le dispositif à rendre sûr,
caractérisé en ce que
pour détecter des positions locales déterminées du système mécanique d'actionnement (32, 60, 61, 62) on prévoit au moins deux détecteurs (U₁, U₂), dont les signaux de sortie sont amenés à un circuit de commutation (42), qui réalise avec l'unité de commande électronique (10) un échange de données, pour la préparer à fonctionner, le dispositif à rendre sûr ne pouvant alors être mis en état de fonctionner par l'échange de données que quand les signaux de sortie des détecteurs (U₁, U₂) correspondent à une position locale prédéfinie des moyens d'actionnement mécaniques (32, 60, 61, 62).

2. Dispositif de sécurité selon la revendication 1,
caractérisé en ce que
le circuit de commutation (42) présente une mémoire (44), dans laquelle est déposé au moins un code prédéterminé et en ce que l'unité de commande électronique (10) n'est alors prête à fonctionner que quand elle reçoit les exigences d'au moins un code prédéterminé (A) à partir de la mémoire (44) du circuit de commutation (42) à celui du circuit de commutation (42).

3. Dispositif de sécurité selon la revendication 1,
caractérisé en ce que
au moins l'un des détecteurs (U₁, U₂) en cas d'utilisation incorrecte du dispositif à rendre sûr délivre un signal au circuit de commutation (42), qui fait que celui-ci après réception d'une demande de transmission d'un code à partir de l'unité de commande (10) électronique renvoie à celle-ci un code rejeté ou ne lui renvoie pas de code.

4. Dispositif de sécurité selon la revendication 1,
caractérisé en ce que
le système mécanique d'actionnement (32, 60, 61, 62) est le cylindre de fermeture d'une serrure à actionner au moyen d'une clé.

5. Dispositif de sécurité selon la revendication 1,
caractérisé en ce que
l'un des détecteurs (U₁, U₂) est relié à l'entrée d'activation de la mémoire (44) pour déterminer son activité.

6. Dispositif de sécurité selon la revendication 1,
caractérisé en ce que
les détecteurs (U₁, U₂) sont des détecteurs optoélectroniques.

7. Dispositif de sécurité selon la revendication 2,
caractérisé en ce que
l'unité de commande électronique (10) ne peut être rendue prête à fonctionner que quand elle reçoit aussi sur demande d'un nombre prédéfini de codes prédéfinis à partir de la mémoire (44) du circuit de commutation (42) au moins une partie prédéfinie de cela.
